# EUROPÄISCHE PATENTANMELDUNG

(11) **EP 0 711 988 A2**
(43) Veröffentlichungstag der Anmeldung: **15.05.1996**
(21) Anmeldenummer: 95115394.9
(22) Anmeldetag: 29.09.1995
(51) Int. Cl.: G01M 11/00, G01M 15/00

(54) **Messgerät zur Überprüfung von Graufiltern**

(30) Priorität: 10.11.1994 DE 4440119
(71) Anmelder: TZN Forschungs- und Entwicklungszentrum Unterlüss GmbH, D-29345 Unterlüss (DE)
(72) Erfinder: Meuel, Bernd, Dr., D-29633 Munster (DE); Klameth, Klaus, D-30419 Hannover (DE); Lutterberg, Michael, D-29225 Celle (DE); Wellhausen, H. Prof., D-31139 Hildesheim (DE)
(74) Vertreter: Behrend, Rainer

(57) **Zusammenfassung**

Die Erfindung betrifft ein Meßgerät zur Überprüfung von Graufiltern (11), bei dem das Graufilter (11) in den Strahlengang zwischen einer Lichtquelle (1) und einem Lichtempfänger (5) (Meßspalt (10)) anordbar ist.

Um zu erreichen, daß mit derartigen Meßgeräten (15) Graufilter (11), insbesondere solche, die zur Eichung von Abgasmeßgeräten benötigt werden, schnell und zuverlässig überprüft werden können, wird vorgeschlagen, das Meßgerät (15) frontseitig mit einer Öffnung (17) zu versehen, durch die das jeweilige Graufilter (11) mittels eines Filterträgers (18) in den Meßspalt (10) zwischen der Lichtquelle (1) und dem Lichtempfänger (5) einschiebbar ist. Der Filterträger (18) ist schubladenartig aufgebaut und besteht aus einer das Filter (11) tragenden Bodenplatte (21) und einer die frontseitige Öffnung (17) des Meßgerätes (15) verschließenden Frontplatte (19). Die das Filter (11) tragende Bodenplatte (21) weist dabei in dem Bereich (24), in dem das Filter (11) auf der Bodenplatte (21) angeordnet ist, eine Durchtrittsöffnung für den Meßlichtstrahl (2) auf.

## Beschreibung

Die Erfindung betrifft ein Meßgerät zur Überprüfung von Graufiltern nach dem Oberbegriff des Anspruchs 1.

Bei der Abgasuntersuchung von Dieselmotoren erfolgt u.a. auch eine Messung der Abgastrübung mit Hilfe eines entsprechenden Abgasmeßgerätes. Zur Eichung dieser Meßgeräte werden Graufilter benutzt, die ihrerseits von Zeit zu Zeit mit einem Kontrollnormal verglichen werden müssen. Dabei wird die Trübung des Kontrollnormals mittels einer optischen Meßeinrichtung gemessen und mit den entsprechenden Meßwerten der zu überprüfenden Graufilter verglichen.

Aufgabe der Erfindung ist es, ein Meßgerät anzugeben, mit dem Graufilter, insbesondere solche, die zur Eichung von Abgasmeßgeräten benötigt werden, schnell und zuverlässig überprüft werden können. Vorzugsweise sollen dabei auch Graufilter mit unterschiedlichen Außenabmessungen überprüfbar sein.

Diese Aufgabe wird durch die Merkmale des kennzeichnenden Teils des Anspruchs 1 gelöst. Weitere vorteilhafte Ausgestaltungen der Erfindung offenbaren die Unteransprüche.

Im wesentlichen liegt der Erfindung der Gedanke zugrunde, das Meßgerät zur Überprüfung der Graufilter frontseitig mit einer Öffnung zu versehen, durch die das jeweilige zu überprüfende Graufilter sowie das Kontrollnormal mittels eines Filterträgers in den Strahlengang einer optischen Trübungsmeßeinrichtung geschoben wird. Dabei ist der Filterträger schubladenartig aufgebaut und besteht aus einer das Filter tragenden Bodenplatte und einer die frontseitige Öffnung des Gerätes verschließenden Frontplatte.

Um Filter mit unterschiedlichen Abmessungen prüfen zu können, hat es sich als vorteilhaft erwiesen, den Filterträger mit einer Aufnahme (Adapteraufnahme) zu versehen, in die unterschiedliche filterspezifische Adapter eingelegt werden können. Für jeden Filtertyp wird hierbei in der Regel ein spezieller Adapter hergestellt, auf dem das jeweilige Filter angeordnet ist.

Vorzugsweise ist der Filterträger über zwei Endschalter mit dem Meßgerät verbunden, die jeweils ein Schaltsignal erzeugen, wenn der Filterträger vollständig in die frontseitige Öffnung eingeschoben oder wenn der Filterträger herausgezogen ist. Dadurch ist es möglich, daß bei herausgezogenem Filterträger eine Selbstjustierung und bei eingeschobenem Filterträger die eigentliche Trübungsmessung automatisch bewirkt werden kann.

Bei einer weiteren Ausbildung der Erfindung ist im Bereich des Strahlenganges ein an einem Schwenkarm befestigter Lichttunnel vorgesehen, der beim Herausziehen des Filterträgers den Lichttunnel in den Strahlengang zieht, so daß bei geöffnetem Filterträger eine fremdlichtunabhängige Justiermessung erfolgen kann.

Um ein vollständiges Herausziehen des Filterträgers aus der frontseitigen Öffnung zu vermeiden, ist ein mechanischer Anschlag an dem Filterträger vorgesehen.

Weitere Einzelheiten und Vorteile der Erfindung ergeben sich aus den folgenden anhand von Figuren erläuterten Ausführungsbeispielen. Es zeigen:
- Fig.1: schematisch den Meßaufbau zur Überprüfung der Graufilter;
- Fig.2: eine Vorderansicht des erfindungsgemäßen Meßgerätes;
- Fig.3: eine Draufsicht auf einen Filterträger mit Adapteraufnahme und
- Fig.4: eine Draufsicht auf ein Ausführungsbeispiel eines Adapters mit einem darauf angeordneten Graufilter.

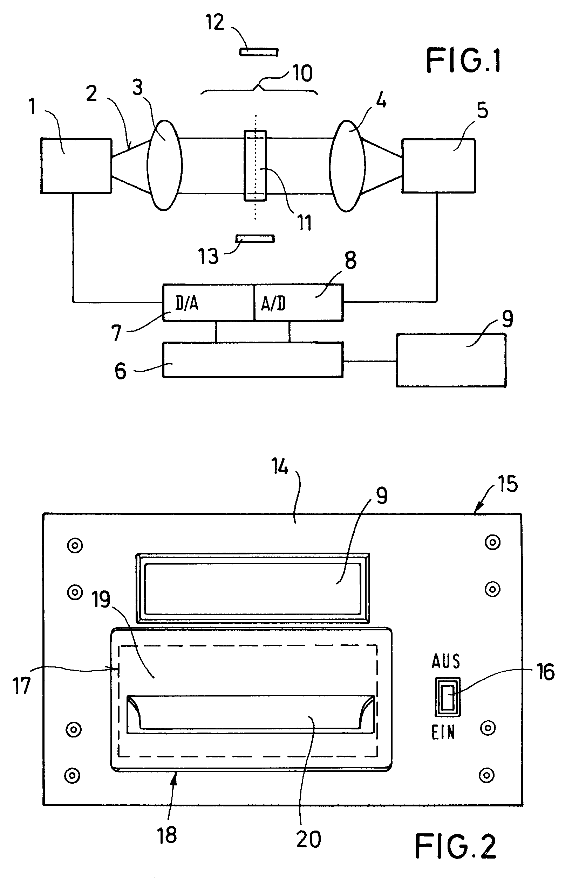

In Fig.1 ist mit 1 eine Lichtquelle (z.B. eine Leuchtdiode) bezeichnet, die einen Lichtstrahl 2 erzeugt, welcher über Linsen 3 und 4 in einen Lichtempfänger 5 (z.B. eine Photodiode) gelangt. Die Ansteuerung der Lichtquelle 1 und die Auswertung der mit dem Empfänger 5 gemessenen Signale erfolgt mit Hilfe eines Mikroprozessors 6, welcher mit der Lichtquelle 1 über einen Digital-/Analog-Wandler (D/A-Wandler) 7 und mit dem Lichtempfänger 5 über einen Analog-/Digital-Wandler (A/D-Wandler) 8 verbunden ist. Die entsprechend gemessenen Trübungswerte etc. werden dann an einer mit dem Mikroprozessor 6 verbundenen Anzeigevorrichtung 9 angezeigt.

In den Strahlengang zwischen den Linsen 3 und 4 (Meßspalt 10) ist ein zu überprüfendes Graufilter 11 eingebracht. Mit 12 und 13 sind zwei Endschalter angedeutet, die mit einem nachfolgend noch näher beschriebenen Filterträger verbunden sind.

Bei der Überprüfung des Graufilters 11 steuert der Mikroprozessor 6 über den D/A-Wandler 7 die Lichtquelle 1, die kontinuierliche Lichtimpulse erzeugt, an. Der Lichtempfänger 5 wandelt die Intensität der von der Lichtquelle 1 kommenden Impulse in eine Spannung um, die über den A/D-Wandler dem Mikrocontroller zugeführt wird.

Zunächst wird ohne eingelegtes Filter 11 ein Justierwert für den ungeschwächten Lichtstrahl 2 ermittelt. Hierzu wird kurz vor Auslösung eines Lichtimpulses mit dem Empfänger 5 der Dunkelwert und anschließend dann nach Auslösung eines Lichtimpulses die entsprechende Intensität ermittelt. Die Differenz beider Werte liefert den Justierwert. Anschließend wird analog zur Ermittlung des Justiervertes der Meßwert bei eingelegtem Graufilter 11 bestimmt. Aus Justierwert und Meßwert ergibt sich nach entsprechender Umrechnung in dem Prozessor 6 der Trübungsgrad, der auf der Anzeigenvorrichtung 9 direkt dargestellt werden kann.

Mit Hilfe eines nachfolgend beschriebenen schubladenartigen Filterträgers werden Filteradapter, auf denen die jeweiligen Filter 11 angeordnet sind, in den Meßspalt 10 gebracht, wobei die Endschalter 12, 13 bei herausgezogenem Filterträger automatisch eine Selbstjustierung bewirken und bei hereingeschobenem Filterträger die eigentliche Messung auslösen.

Fig. 2 zeigt die Frontplatte 14 eines erfindungsgemäßen Meßgerätes 15. Im wesentlichen befindet sich an der Frontplatte 14 ein Schalter 16 zum Ein- und Ausschalten des Gerätes, die Anzeigevorrichtung 9 und eine gestrichelt dargestellte Öffnung 17, in die ein das Graufilter 11 tragender Filterträger 18 einschiebbar angeordnet ist. Die Frontplatte des Filterträgers 18 ist mit dem Bezugszeichen 19 versehen. An ihr ist ein Griff 20 zum Herausziehen und Hereinschieben des Filterträgers 18 befestigt.

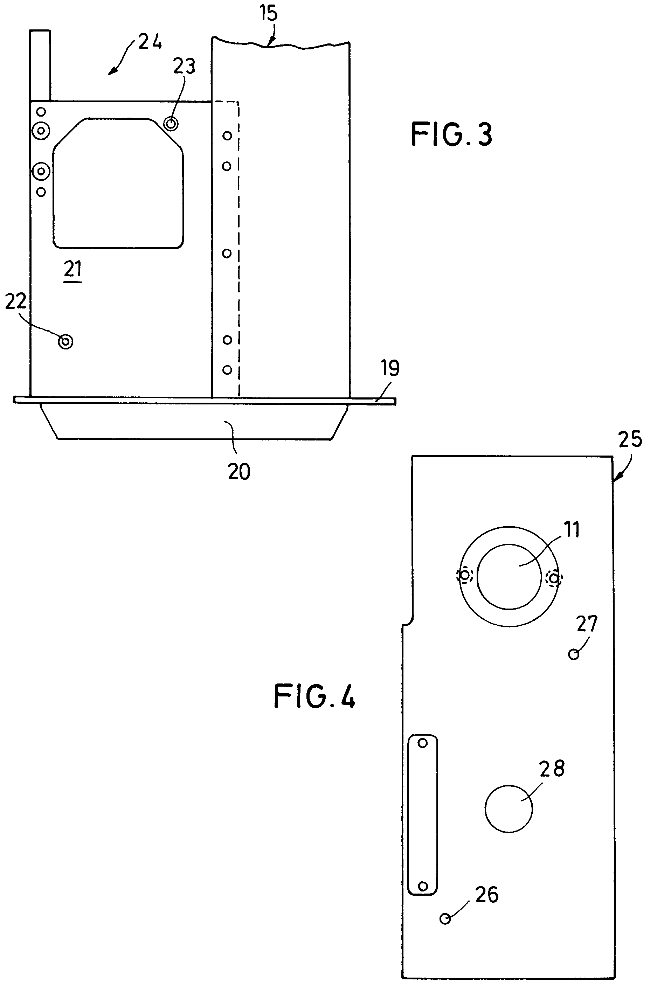

Eine Draufsicht auf einen Teil des Filterträgers 18 zeigt Fig.3. An der mit dem Griff 20 versehenen Frontplatte 19 ist eine Bodenplatte 21 befestigt, die als Adapteraufnahme für unterschiedliche Filteradapter ausgebildet ist. Zur Befestigung der Filteradapter sind z.B. zwei Aufnahmestifte 22, 23 vorgesehen. Außerdem ist der dem Meßspalt 10 (Fig.1) zugewandte Bereich 24 der Bodenplatte 21 teilweise offen. In diesem Bereich 24 befindet sich jeweils das auf einem entsprechenden Adapter angeordnete Filter 11.

Das Ausführungsbeispiel eines mit 25 bezeichneten Filteradapters mit darauf angeordnetem Filter 11 ist in Fig. 4 dargestellt. Dabei weist der Adapter Bohrungen 26, 27 auf, in die bei Auflage des Adapters 25 auf die Bodenplatte 21 (Fig.3) die Aufnahmestifte 22, 23 eingreifen. Ferner ist ein Griffknopf 28 zum Heben des Adapters vorgesehen. Im Bereich des Graufilters 11 weist der Adapter 25 unterhalb des dargestellten Filters 11 eine Lichtdurchtrittsöffnung auf.

Die Erfindung ist selbstverständlich nicht auf das vorstehend beschriebene Ausführungsbeispiel beschränkt. So sind zahlreiche Modifikationen sowohl für die als Adapteraufnahme ausgebildete Bodenplatte 21 als auch für die Filteradapter selbst denkbar.

### Bezugszeichenliste

- 1: Lichtquelle
- 2: Lichtstrahl
- 3,4: Linsen
- 5: Lichtempfänger
- 6: Mikroprozessor, Prozessor
- 7: D/A-Wandler
- 8: A/D-Wandler
- 9: Anzeigevorrichtung
- 10: Meßspalt
- 11: Graufilter
- 12,13: Endschalter
- 14: Frontplatte des Meßgerätes 15
- 15: Meßgerät
- 16: Schalter
- 17: Öffnung
- 18: Filterträger
- 19: Frontplatte des Filterträgers 18
- 20: Griff
- 21: Bodenplatte
- 22,23: Aufnahmestifte
- 24: Bereich der Bodenplatte
- 25: Filteradapter, Adapter
- 26,27: Bohrungen
- 28: Griffknopf

## Patentansprüche

1. Meßgerät zur Überprüfung von Graufiltern (11), bei dem das jeweilige Graufilter (11) in den Strahlengang zwischen einer Lichtquelle (1) und einem Lichtempfänger (5) (im folgenden als Meßspalt (10) bezeichnet) anordbar ist, **dadurch gekennzeichnet**, daß das Meßgerät (15) eine Frontplatte (14) aufweist, welche eine Öffnung (17) besitzt, durch die das jeweilige Graufilter (11) mittels eines Filterträgers (18) in den Meßspalt (10) einschiebbar ist, daß der Filterträger (18) schubladenartig aufgebaut ist und aus einer das Filter (11) tragenden Bodenplatte (21) und einer die frontseitige Öffnung (17) des Meßgerätes (15) verschließenden Frontplatte (19) besteht, und daß die das Filter (11) tragende Bodenplatte (21) in dem Bereich (24), in dem das Filter (11) auf der Bodenplatte (21) angeordnet ist, eine Durchtrittsöffnung für den Meßlichtstrahl (2) aufweist.

2. Meßgerät nach Anspruch 1, **dadurch gekennzeichnet**, daß die Bodenplatte (21) des Filterträgers (18) zur Vermessung von Filtern (11) unterschiedlicher Abmessungen derart ausgebildet ist, daß sie unterschiedliche die Filter (11) tragende Adapter (25) aufnimmt.

3. Meßgerät nach Anspruch 1 oder 2, **dadurch gekennzeichnet**, daß der Filterträger (18) über zwei Endschalter (12,13) mit dem Meßgerät (15) verbunden ist, die jeweils ein Schaltsignal erzeugen, wenn der Filterträger (18) vollständig in die frontseitige Öffnung (17) eingeschoben oder wenn der Filterträger (18) herausgezogen ist.

4. Meßgerät nach einem der Ansprüche 1 bis 3, **dadurch gekennzeichnet**, daß ein mechanischer Anschlag vorgesehen ist, der ein vollständiges Herausziehen des Filterträgers (18) aus der frontseitigen Öffnung (17) verhindert.

5. Meßgerät nach einem der Ansprüche 1 bis 4, **dadurch gekennzeichnet**, daß im Bereich des Meßspaltes (10) ein an einem Schwenkarm befestigter Lichttunnel vorgesehen ist, der beim Herausziehen des Filterträgers (18) den Lichttunnel in den Strahlengang (10) zieht, damit bei herausgezogenem Filterträger (18) eine fremdlichtunabhängige Justiermessung erfolgen kann.

6. Meßgerät nach einem der Ansprüche 1 bis 5, **dadurch gekennzeichnet**, daß die Frontplatte (14) des Meßgerätes (15) zusätzlich zur Öffnung (17) eine Anzeigenvorrichtung (9) aufweist, die mit einem Mikroprozessor (6) gekoppelt ist.

7. Meßgerät nach einem der Ansprüche 1 bis 6, **dadurch gekennzeichnet**, daß der Filterträger (18) auf seiner der Bodenplatte (21) abgewandten Seite der Frontplatte (19) mit einem Griff (20) versehen ist.
